(19) Europäisches Patentamt

European Patent Office

Office européen des brevets

(11) EP 2 879 883 B1

(12) EUROPEAN PATENT SPECIFICATION

(45) Date of publication and mention
of the grant of the patent:
**12.04.2017 Bulletin 2017/15**

(21) Application number: **13753409.5**

(22) Date of filing: **12.07.2013**

(51) Int Cl.:
**G02B 5/18** *(2006.01)*    **B42D 25/29** *(2014.01)*

(86) International application number:
**PCT/CZ2013/000082**

(87) International publication number:
**WO 2014/019558 (06.02.2014 Gazette 2014/06)**

(54) **METHOD FOR FORMING A DIFFRACTIVE OPTICAL ELEMENT**

HERSTELLUNGSVERFAHREN FÜR EIN DIFFRAKTIVES OPTISCHES ELEMENT

PROCEDE DE FABRICATION D'UN ELEMENT OPTIQUE DIFFRACTIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **31.07.2012 CZ 201200524 U**

(43) Date of publication of application:
**10.06.2015 Bulletin 2015/24**

(73) Proprietor: **API OPTIX S.R.O.
250 68 Husinec-Rez (CZ)**

(72) Inventor: **RYZI, Zbynek
Littleton, MA 01460 (US)**

(74) Representative: **Linn, Samuel Jonathan
23 Bings Road
Whaley Bridge
Derbyshire SK23 7ND (GB)**

(56) References cited:
**WO-A2-2005/071444    DE-A1- 10 226 115
US-A1- 2002 036 731**

• **DAVID C ET AL: "Line width control using a
defocused low voltage electron beam",
MICROELECTRONIC ENGINEERING, ELSEVIER
PUBLISHERS BV., AMSTERDAM, NL, vol. 46, no.
1-4, 1 May 1999 (1999-05-01), pages 219-222,
XP004170706, ISSN: 0167-9317, DOI:
10.1016/S0167-9317(99)00066-0**

## Description

Technical Field

The invention relates to a method of forming a diffractive element made up of a set of rectangular grating pixels with a grating structure having a grating period and grating tilt and in which at least some grating pixels have different grating periods and/or different grating tilts and at least some grating pixels are in direct contact with each other.

Prior Art

Optical elements of the diffractive character are often used for security purposes and/or for the authentication of products, documents, securities, etc. They are often known as "security hologram" or as "security diffractive optically variable image devices" (security DOVIDs). Their fundamental characteristic is their inner microstructure with feature sizes typically comparable to the size of the wavelength or its multiples. A diffraction grating is a typical, and also basic, representative of such a structure. Diffractive elements with several diffraction cells are known from US 2002/0036731 A1 and WO2005/071444 A2

A typical structure of a diffraction grating consists of a set of periodically repeating lines with a given spacing (period) and rotation angle (tilt).

A diffraction grating decomposes incoming white light into a spectrum of colours, and at the same time it changes the direction of its propagation. Light passing through or being reflected by the grating is perceived by an observer in various colour shades, depending on the angle of observation and/or angle of incidence.

If more grating structures are composed into a more complex image on the area, the observer can perceive reflected or transmitted light in the form of an image.

Such an image can be two-dimensional (similar to printed graphics) or three-dimensional (such as a stereoscopic image or hologram), whilst both types of images can exhibit dynamic properties (i.e. graphic or holographic motives change), depending on the angle of incidence of incoming light and/or angle of observation.

To compose diffractive images by sophisticated combinations of various elementary diffraction gratings is a common method of creating such images. A set of graphic motives often serves as a model for such a composition, and such motives get converted into a diffractive pattern, often in the form of elementary gratings; so-called grating pixels.

This method of creation of diffractive images was introduced during the times of extensive growth of computer technologies and computer graphics which enabled the processing of large volumes of data at the level of individual graphic dots (graphic pixels). At the same time, methods of dot-oriented recording of diffractive images started to develop. One of such recording methods is, for example, the so-called dot-matrix recording technique, which records elementary grating pixels using interfering laser beams. Among other grating pixel recording methods belongs, for example, laser or electron beam lithography. Such e-beam lithographic recording methods are known from DE 102 26 115 A1.

In the case of pixel-oriented recording methods, such as dot-matrix recording or direct recording using a laser or electron beam, the inner grating structure and positioning of individual lines within the recorded grating pixel becomes important when the pixel size decreases to under approx. 25 $\mu$m (1000 dpi), and particularly under approx. 10 $\mu$m (2500 dpi). As the pixel area decreases, the portion of that area near the pixel boundaries where the grating may not be recorded (exposed) fully increases. This may cause a reduction in the brightness of the diffractive image composed of the grating pixels. The boundaries represent a problem particularly for dot-matrix recording methods, where the grating is exposed less efficiently as a result of uneven distribution of the intensity in the recording laser beams, and/or as a result of diffractive effects at the boundaries of specifically shaped pixels. In addition to this, the reduction of the pixel area in the intent to increase resolution results in reduced number of grating lines, which is also accompanied by a reduction in intensity of the radiation from such a pixel in a desired direction, or by an increase of angular scattering.

Another parameter which can significantly affect the brightness of the observed diffractive image composed of the grating pixels is the relative position of the grating lines in the adjacent pixels. If the grating lines do not connect, i.e. they look shifted, reduced brightness of the resulting diffractive image occurs. Incident light, which diffracts on connected gratings, propagates towards the observer in-phase, i.e. light waves diffracted on the adjacent gratings are amplified (wave peaks are propagating jointly). Light diffracting on unconnected (shifted) adjacent gratings is attenuated, however, because the waves are not propagating in-phase (peaks and valleys of waves partially eliminate each other) and in extreme cases are propagating with opposite phases. Such an attenuation of the light waves becomes significant when the waves coming from the individual pixels propagate in the same direction (i.e. the grating structure has the same tilt and period) and the waves partially overlap due to the diffraction effects. These effects get larger as the grating pixel size gets smaller.

In a typical dot-matrix record, i.e. a record made by interfering laser beams focused on a small area, the position (or phase) of the grating lines inside the pixel is purely random. In order to control the phase of the grating lines, a very complex and extremely accurate recording device is required. The acquisition and operation of such a device for the recording of diffractive images would not be very economical, however. Nevertheless, devices allowing control of the phase of the grating lines have been built and are being used, mostly in the field of optical applications. A device called "Nanoruler" can be mentioned as an example (C.-H. Chang, C. Joo, Juan Montoya, Dr. Ralf Heilmann, "The MIT Nanoruler: A Tool for Patterning Nano-Accurate Gratings"). Although the phase of the grating structure is not being controlled during the dot-matrix type recording, i.e. it is random, this fact may actually be advantageously used in practice for the authentication of the recorded diffractive image, since two different dot-matrix recording systems would not expose grating pixels with the same position of the grating lines (see, for example, the article "Identifying a dot-matrix hologram by the deviations of the fringe positions of its grating dots", Sheng Lih Yeh, Opt. Eng. 45, 075803, Jul 07, 2006).

In a direct, i.e. non-interference, method of recording by a laser or electron beam, the position of lines is controlled directly. Direct control allows creating grating structures in such a way, that they are continuous throughout the adjacent pixels, which maximises brightness of the recorded diffractive image. However, if the direct recording is limited by the ultimate resolution of positioning of the recording beam (typically in sub-micrometre down to nanometre range), the recording of the grating pixel may have its own limitations, if there is a requirement that grating lines in the adjacent pixels are continuous. If the pixels of a given size are distributed evenly on the diffractive image area, e.g. in a similar way as in a typical graphic bitmap, and if they are filled with a grating structure of the same type (for example, if they represent one graphic motive of the diffractive image), it is generally not guaranteed that the grating lines will be continuous. For certain parameters of the grating structure (tilt and period), the grating structure of the recorded pixels will be continuous, and for other parameters will not be continuous. This is due to the fact that the pixel shape, pixel area, distribution of pixels on the area, and ultimate recording resolution (address grid) are fixed. The consequences of the continuity or discontinuity of the grating lines will become evident from the radiation characteristics of the diffraction image constructed from a specific grating pixel.

A typical diffractive image consists of a series of graphic motives which differ particularly in colour and direction of radiation and which may be represented in a digital form of a bitmap, i.e. dots arranged in a regular rectangular grid. Pixels of a diffractive image are called grating pixels. When creating an image, the advantage of the pixel arrangement lies in the possibility that it can be generated by standard software graphic tools.

The inner structure of the grating pixel has a form of grating lines, the period and tilt of which determine basic radiation characteristics, i.e. colour and direction of radiation.

The ability to choose any combination of grating tilt and period has a substantial effect on the number of options of the diffractive image design; the spectrum of colours and radiation angles can be almost continuous. This gives freedom to the graphic designer when designing a diffractive image and allows him to design images of better quality. In an analogy with conventional graphics, it is possible to design images when only 256 colour shades are available (so-called 8-bit graphics), or when more than 16 million of shades are available (so-called 24-bit graphics).

The 24-bit graphics provide a higher quality of perception to the observer than the 8-bit graphics.

As described above, a fixed size of the grating pixel together with a fixed recording grid limits radiation options of the diffractive image composed of such periodically repeated pixels. Considering this, if the pixel size is further reduced (i.e. resolution of the image is increased), the number of combinations of the grating structures which can be recorded continuously is also reduced. In other words, the diffractive image may be composed effectively only with a lower number of different constructions of the grating pixel. This will result in further reduction of radiation options of the diffraction image. If a diffractive image includes variable graphic motives radiating into various observation angles, the transition between individual motives may appear to the observer as a coarse switching, i.e. the transition is not continuous. Furthermore, if the diffractive motives are composed of grating pixels whose lines are not connected continuously, the variable motives may appear to the observer as angularly overlapped and/or with reduced brightness.

Although the issues associated with connecting the grating lines can be solved without the use of the concept of grating pixels, the pixel arrangement of the diffractive image still has its advantages. It allows fast conversion of graphic motives in the form of graphic bitmaps created by standard graphic programs into the exposure data in the form of the grating pixels. Known diffractive elements typically comprise a set of grating pixels of fixed size in a given diffractive element, and differ only in the grating period and grating tilt.

The goal of the invention is to create a diffractive element and a method of creating such a diffractive element where the brightness of the resulting diffractive image is not reduced, as is the case with the current state of the technology.

Summary of the Invention

The above-mentioned goal can be achieved by a diffractive element composed of a set of rectangular grating pixels comprising a grating structure defined by a grating period and grating tilt, where at least some grating pixels have different grating periods and/or different grating tilts and at least some grating pixels are in direct contact with each other. The essence of the invention lies in the arrangement of the set of grating pixels which includes grating pixels of different sizes, whilst the size of the grating pixels with the same grating period and the same tilt is such that the lines of the grating structure of adjacent grating pixels with the same grating period and grating tilt continue on through their common boundary.

Accordingly, the present invention provides a method of forming a diffractive element in which a set of grating pixels forming a diffractive image is created on an area of a recording medium using a recording beam, wherein the method comprises:

(i) defining a set of rectangular grating pixels each with respective selected values of dimensions (Lx) and (Ly) and with a grating structure comprising straight grating lines having a respective given grating period (D) and a respective given grating tilt angle (a), at least some of the grating pixels having a different given grating period (D) and/or a different given grating tilt angle (a) from other(s) of the grating pixels, and at least some of the grating pixels being in direct contact with each other,

wherein the respective values of dimensions (Lx) and (Ly) of respective ones of the set of rectangular grating pixels are selectable from variable such values of those dimensions (Lx) and (Ly),

and calculating the respective dimensions (Lx) and (Ly) of respective ones of the grating pixels to be defined which have the same given grating period (D) and the same given grating tilt angle (a) from their given grating period (D) and their given grating tilt angle (a) such that the lines of the grating structures of adjacent grating pixels with the same grating period (D) and the same grating tilt angle (a) are continuous through a common boundary of those grating pixels; and

(ii) populating the area of the recording medium by recording thereon the set of grating pixels defined in step (i).

In comparison with known diffractive elements consisting of grating pixels of fixed size, the diffractive element made according to this invention allows grating lines of the grating structures of the adjacent pixels of a given grating period and a given grating tilt to always continue on through their common boundary by choosing different sizes of the grating pixels used. Thus the optimum size of the grating pixel used is determined for a given grating period and a given grating tilt, so that the lines of the grating structure of adjacent grating pixels always continue on through their common boundary.

According to a preferred embodiment, the individual grating pixels in contact with each other and having the same grating period (D) and the same tilt angle (a) are arranged in pixel grids that in step (ii) are recorded on the recording medium by a recording beam in such a way that the pixel grids are in direct contact with each other and/or empty spaces are left between them and/or the empty spaces between them are filled with sub-pixels into which individual grating pixels are sub-divided.

In embodiments of the invention, the diffractive element may include arrangements of the pixels not only in one given pixel grid, as is typical for the conventional bitmap graphics or for the ordinary dot-matrix systems, but may combine multiple different pixel grids for the purpose of increasing the options of the diffractive image design, brightness maximisation by the elimination of potential discontinuities of the grating lines on boundaries of the adjacent pixels of the same type, and enhancement of the quality of the diffractive image radiation capabilities.

According to another embodiment, subsequent to the step (i) of defining of the set of rectangular grating pixels, but prior to step (ii), there is carried out an additional defining step comprising:

(ia) modifying the boundaries of the defined rectangular grating pixels so as to form modified grating pixels such that when the resulting modified grating pixels having grating lines of the same grating period (D) and grating tilt (a) are periodically reproduced across the recording medium area in a matching manner with a step period, such repeated boundary-modified grating pixels have a step period in a direction (x) of the repeated modified grating pixels which is equal to the dimension (Lx) or a multiple thereof, and a step period in a direction (y) of the repeated modified grating pixels which is equal to the dimension (Ly) or a multiple thereof; and wherein the step (ii) comprises populating the area of the recording medium by recording thereon the set of modified grating pixels defined in step (ia).

Pitch $\Delta$x and $\Delta$y of the recording grid and the cross-section of the recording beam depend on the type and capabilities of the recording device, and, if the device allows, they are chosen for the recording of a grating structure, i.e. grating lines of one type of the grating pixels, such that the grating lines, recorded in such a recording grid and with such a beam cross-section, are differentiable. The pitch and size of the beam in directions x or y are typically smaller than one-half of the grating period projected in direction x or y, respectively.

In another advantageous embodiment, in the defining step (i) a minimum possible dimension (Lx) of a grating pixel is determined in direction (x) from the relation (Lx) = (D)/sin(a) and a minimum possible dimension (Ly) of a grating pixel is determined in direction (y) from the relation (Ly) = (D)/cos(a), where:

D = grating period [$\mu$m], and
a = grating tilt angle [degrees, °];

if the found minimum possible dimensions (Lx) and (Ly) of the grating pixel are not integer-divisible by the pitch values of the recording grid or by chosen steps ($\Delta$x), ($\Delta$y) of the positioning of the recording beam in respective directions (x) and (y), the dimensions (Lx) and (Ly) of the grating pixel are rounded to the nearest integer multiples of the pitch values of the recording grid or the chosen steps ($\Delta$x), ($\Delta$y) of the positioning of the recording beam in respective directions (x) and (y),

and such adjusted dimensions (Lxupr) and (Lyupr) of the grating pixel, are used for retrospective determination of the adjusted values of the grating period (Dupr) and grating tilt angle (aupr);

if the adjusted values of the grating period (Dupr) and grating tilt angle (aupr) do not differ from the original grating period (D) and/or original grating tilt angle (a) by more than the predetermined permitted deviation, the adjusted dimensions (Lxupr) and (Lyupr) of the grating pixel represent the final dimensions of the grating pixel; and

if the adjusted values of the grating period (Dupr) and/or grating tilt angle (aupr) differ from the values of the grating period (D) and/or grating tilt angle (a) by more than the permitted deviation, the minimum possible dimension (Lx) of the grating pixel is successively increased by its integer multiples in direction (x) and/or the minimum possible dimension (Ly) of the grating pixel is successively increased by its integer multiples in direction (y), until the values of the period (Dupr) and tilt angle (aupr) of the grating achieve values within limits of the predetermined deviation or a given accuracy.

Grating lines forming the grating structure with period Dupr and tilt aupr may then be written into the grating pixel of dimension Lxupr, Lyupr, using a recording beam of a constant cross-section and recording grid with pitch Δx, Δy.

In another advantageous embodiment, in step (ii) different grating pixels are recorded on the recording medium using a recording beam of respective different cross-sections, whilst for identical grating pixels the cross-section of the recording beam is constant.

Brief Description of the Drawings

Embodiments of the diffractive element according to the invention will now be described in detail with reference to the attached drawings, in which:

Fig. 1 shows a grating pixel with a grating structure;
Fig. 2 shows a pixel-oriented record with pixels arranged into one specific pixel grid, as is typical for conventional bitmap graphics or for ordinary dot-matrix systems according to the currently known state of the art; and
Figs. 3 and 4 show examples of designs of diffractive elements according to embodiments of the invention.

Description of Preferred Embodiments

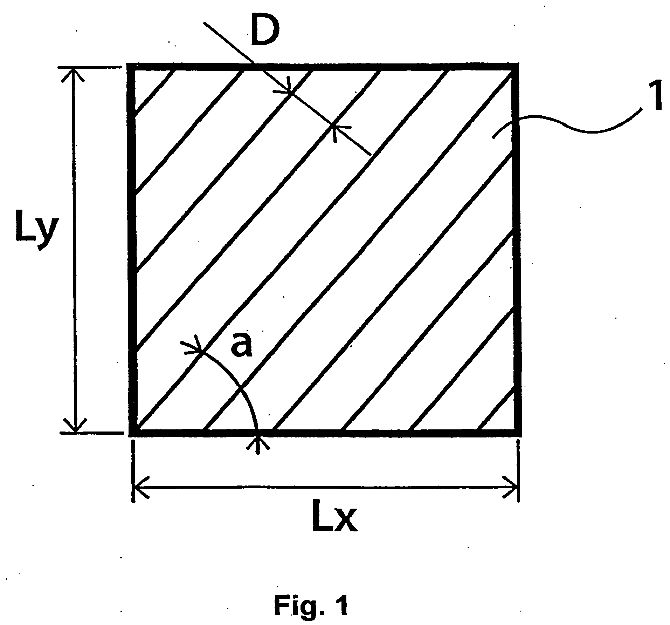

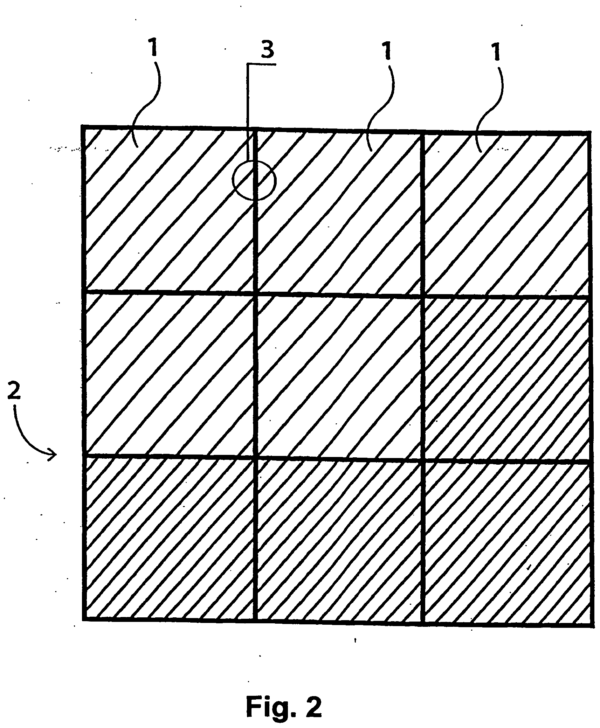

Fig. 1 presents an example of an implementation of grating pixel 1, whose grating structure has grating period D and grating tilt a. The set of such grating pixels 1 forms diffractive element 2. In the case of known implementations (see Fig. 2), the diffractive element 2 comprises a set of grating pixels 1 with fixed dimensions Lx and Ly. The problem is that in the case of fixed sizes of grating pixels 1 the lines of the grating structures of adjacent grating pixels 1 with the same grating period D and the same grating tilt a may not always continue on through their common boundary, as shown on Fig. 2 in detail 3.

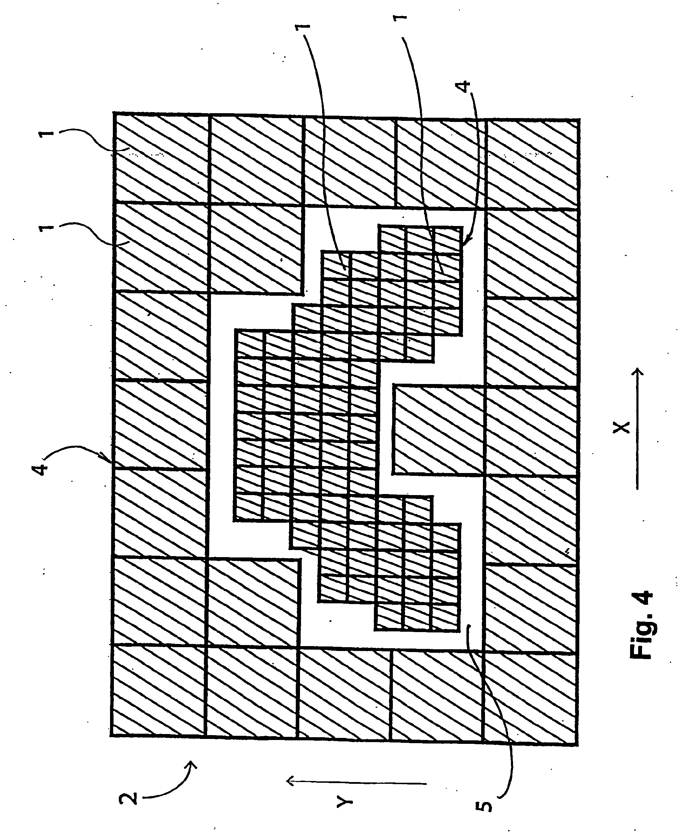

Fig. 4 presents an example of a very simple diffractive element 2 according to the invention. The diffractive element 2 shows letter A on a background. The area of the letter A on diffractive element 2 is filled with a set of grating pixels 1 with dimensions Lx1 and Ly1 and with grating period D1 and grating tilt a1, whilst the background is filled with grating pixels 1 of different dimensions Lx2 and Ly2 and with different grating period D2 and grating tilt a2. The use of dimensions Lx1 and Ly1 of pixels 1 to fill the letter A, and different dimensions Lx2 and Ly2 of pixels 1 to fill the background, enables the adjustment of the sizes of pixels 1 to the particular grating period D and grating tilt a in such a way that, within the given group of grating pixels 1 the lines of the grating structures of the adjacent grating pixels 1 of the same grating period D and the same grating tilt a always continue on through their common boundary. This would not always be possible if the fixed size of grating pixels 1 were used, as is used in the current state of technology.

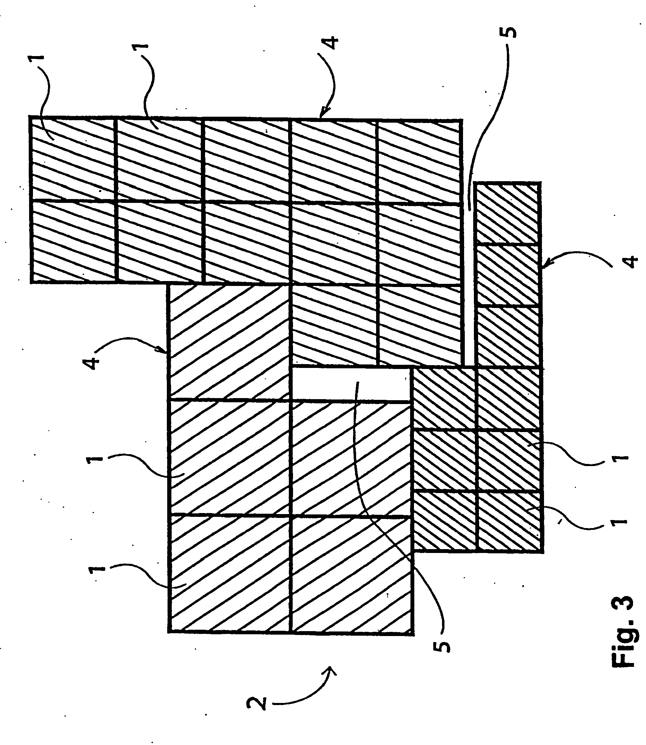

Fig. 3 presents a detail of another example of an embodiment of diffractive element 2 according to the invention. Diffractive element 2 comprises three pixel grids 4. Grating pixels 1 with a grating structure of the same grating period D and the same grating tilt a are always used within one pixel grid 4. The size of grating pixels 1 is tailored to the given grating period D and grating tilt a in such a way, that the lines of grating structures of the adjacent grating pixels 1 of the same grating period D and grating tilt a continue on through a common boundary.

Individual pixel grids 4 are connected in some locations, whilst empty spaces 5 are left between them in other locations. Free places 5 between individual pixel grids 4 could also be filled with sub-pixels. The sub-pixels are created by sub-dividing grating pixels 1 of given grating period D of and grating tilt a into smaller parts. Therefore, sub-pixels of grating pixels 1 belonging to two different adjacent pixel grids 4 could occur in empty spaces 5. In the case of a diffractive image, for example, the sub-pixels usually follow the boundary of the graphic motive.

The grating structure forms a diffraction grating that decomposes incident white light into a colour spectrum and, at the same time, changes the direction of its propagation. An observer who observes diffractive element 2 perceives light passed through or reflected by the grating in various colour shades, depending on the angle of observation or angle of incidence.

Typically, when more complex diffractive images are created, one particular motive of such an image is composed of grating pixels 1 of one type (grating pixel of a certain size, grating period D and grating tilt a), i.e. grating pixel 1 is populated across the area delimited by the graphic motive. Generally, the adjacent motive of the diffractive image is composed of different types of grating pixels 1.

The process of filling the motives of the diffractive image with grating pixels 1 can be done in multiple ways.

The first example of filling the motives of the diffractive image with grating pixels 1 assumes that grating pixels 1 will be filling the given motive area coarsely, i.e. fineness of boundaries of the motive will be given by the size of grating pixel 1. The adjacent motive will continue the filling process using a different type of grating pixels 1 and generally with different fineness. At the locations where different grating pixels 1 do not fit each other completely, spaces between motives will remain unfilled. In such a case, however, the individual graphic motives of the diffractive image may be represented by simple graphic bitmaps.

Another example of filling the diffractive image motives with grating pixels 1 assumes that grating pixel 1 is trimmed on the motive boundaries in such a way that the motive boundary is filled with the desired fineness. Individual motives can still be defined by graphic bitmaps; however, their trimming on motive boundaries requires working with grating pixels 1 at their inner level, which exceeds the capabilities of standard graphic tools.

The last example of filling the diffractive image motives with grating pixels 1 assumes that grating pixel 1 is divided internally into several parts, into so-called sub-pixels, that represent a specific segment of its inner structure. Filling the diffractive image motive with the respective grating pixels 1 is performed at the level of grating sub-pixels, which ensures a higher fineness of the boundaries than filling the motive with un-divided grating pixels 1. At the same time, the grating sub-pixels may be represented by the graphic pixels. This method of combining grating pixels 1 into a diffractive image represents a compromise between the above-described examples; whilst from a graphic standpoint, it is solvable fully at the level of a bitmap.

The design of grating pixel 1 is based on the requirements for basic parameters of the grating, i.e. grating period $D$ and grating tilt $a$. These two parameters can be chosen completely arbitrarily (more precisely, with defined tolerances; e.g. $\pm 0.1°$ for maximum angle deviation and $\pm 1\%$ for maximum deviation from the grating period $D$), depending on the radiation characteristics that have to be achieved by the resulting diffraction element 2.

Other important input parameters for a design of grating pixel 1 include characteristics of the recording device that is used for recording the gratings. In particularly, this includes the ultimate resolution of the positioning of the recording laser or electron beam. The design assumes that the positioning of the recording beam is performed in a rectangular grid (in directions x and y), whilst minimum pitch of grid $\Delta x$ and $\Delta y$ is given by the smallest positioning step (ultimate resolution) or its multiples. The grid pitch values in directions x and y are generally different.

The size of the spot of the recording laser or electron beam is not important here. The spot needs to be sufficiently small so that the grating lines could be resolved. Also, the shape of the spot cross-section can be arbitrary, e.g. round, elliptic, rectangular, etc. Further, it is also assumed that the nominal size and shape of the spot does not change during the recording of the grating lines within one type of grating pixel 1.

The essence of the method for the creation of diffractive element 2 is based on a process of creating a set of rectangular grating pixels 1 of various dimensions $Lx$ and $Ly$ and grating structures with various grating periods $D$ and various grating tilts $a$ on a recording medium, such as photoresist or electron resist using, for example, a laser or electron recording beam. The dimensions of the grating pixels with the same grating period $D$ and the same grating tilt $a$ are such integer multiples of recording pitches $\Delta x$ and $\Delta y$ in the respective directions, that, according to the example of the embodiment, the grating lines contained in the adjacent grating pixels 1, will be recorded by a recording beam of a constant cross-section in a recording grid of pitches $\Delta x$ and $\Delta y$ in such a way, that they would continue on through a common boundary of grating pixels 1.

In the course of recording, individual adjacent grating pixels 1 containing a grating structure of the same grating period $D$ and the same grating tilt $a$ are arranged in pixel grids 4 that are recorded by the recording beam of a constant cross-section on the recording medium in such a way that they are in direct contact with each other and/or there is empty space 5 left between them and/or the empty space between them is filled with sub-pixels.

A procedure for how to design a grating pixel is explained in detail on a particular example below.

First, minimum possible dimension Lx of grating pixel 1 in direction x shall be determined from relation

$$Lx = D/sina$$

and minimum possible dimension Ly of the grating pixel 1 in direction y from relation

$$Ly = D/cosa,$$

where

    D = grating period [$\mu$m]
    a = grating tilt [degrees, °],

if the found minimum possible dimensions Lx and Ly of grating pixel 1 are not integer-divisible by the pitch of the recording grid or by the chosen positioning step $\Delta x$, $\Delta y$ of the recording beam in respective directions x and y, dimensions Lx and Ly of the grating pixel 1 shall be rounded to the nearest integer multiples of the recording grid pitch or chosen step of positioning Δx, Δy of the recording beam in respective directions x and y.

The dimensions of grating pixel 1 adjusted by such a manner Lxupr and Lyupr, will be used for the retrospective determination of the adjusted grating period Dupr and grating tilt aupr.

If the adjusted values of grating period Dupr and grating tilt aupr do not differ from the original grating period D and/or original grating tilt a by more than the predetermined permitted deviation, the adjusted dimensions Lxupr and Lyupr of grating pixel 1 represent the final dimensions of grating pixel 1.

If the adjusted value of grating period Dupr and/or grating tilt aupr differs from the value of grating period D and/or grating tilt a by more than the permitted deviation, the minimum possible dimension Lx of the grating pixel 1 is increased by integer multiples in direction x and/or minimum possible dimension Ly of the grating pixel 1 is increased by integer multiples in direction y, until the values of grating period Dupr and grating tilt aupr achieve values within the boundaries of the predetermined deviation.

The recording grid shall be sufficiently fine so that the individual grating lines canbe distinguished reasonably. In addition, the size or shape of the recording beam cross-section shall be sufficiently small, so that the grating lines can be distinguished upon completion of the recording process. It is necessary that the beam size is smaller than grating period D, i.e. smaller than $D/\sin(a)$ in direction x and smaller than $D/\cos(a)$ in direction y.

If the limitations of the recording device (size of the cross-section of the recording beam and, namely, the minimum chosen step of positioning Δx, Δy of the recording beam in directions x and y), and tolerances on the period D and tilt a of the grating acceptable for the graphic designer are taken into consideration, then the parameters of the spacing of the pixel grid can be found such that the grating lines are continuous, which is important for the maximization of the brightness of diffractive element 2, and thus its quality.

By the correct choice of dimensions Lx and Ly of the grating pixel 1, the desired radiation characteristics of the part of diffractive element 2 that is filled with these repeating grating pixels 1 can be achieved. Another part of diffractive element 2 may be filled with grating pixel 1 of a different grating period D and different grating tilt a, and in general of a different size, which is chosen such that the grating lines of the adjacent grating pixels 1 are continuous and keep the optimum radiation characteristics of this part of the diffractive motive.

However, grating pixel 1, as it was designed according to the invention, may not keep in its square or rectangular form. The boundary of grating pixel 1 can be changed arbitrarily (e.g. into a staircase shape), but such that, when pixels are periodically copied across an area in a matching manner, the step period is equal to its original dimensions Lx, Ly or a multiple of these dimensions. The structure of the grating lines, designed originally for a square or rectangular grating pixel 1 does not change; the only change is in the shape of the pixel boundary. The change of the boundary of grating pixel 1 may be advantageous either in view of the recording technology or specific shapes of the borders that may be used as identification or authentication elements of the producer.

## Claims

1. A method of forming a diffractive element (2) in which a set of grating pixels forming a diffractive image is created on an area of a recording medium using a recording beam, wherein the method comprises:

   (i) defining a set of rectangular grating pixels (1) each with respective selected values of dimensions (Lx) and (Ly) and with a grating structure comprising straight grating lines having a respective given grating period (D) and a respective given grating tilt angle (a), at least some of the grating pixels (1) having a different given grating period (D) and/or a different given grating tilt angle (a) from other(s) of the grating pixels (1), and at least some of the grating pixels (1) being in direct contact with each other, wherein the respective values of dimensions (Lx) and (Ly) of respective ones of the set of rectangular grating pixels (1) are selectable from variable such values of those dimensions (Lx) and (Ly), and calculating the respective dimensions (Lx) and (Ly) of respective ones of the grating pixels (1) to be defined which have the same given grating period (D) and the same given grating tilt angle (a) from their given grating period (D) and their given grating tilt angle (a) such that the lines of the grating structures of adjacent grating pixels (1) with the same grating period (D) and the same grating tilt angle (a) are continuous through a common boundary of those grating pixels (1) arranged in a pixel grid (4); and
   (ii) populating the area of the recording medium by recording thereon the set of grating pixels (1) defined in step (i).

2. The method according to claim 1, wherein the individual grating pixels (1) in contact with each other and having the same grating period (D) and the same tilt angle (a) are arranged in pixel grids (4) that in step (ii) are recorded on the recording medium by a recording beam in such a way that the pixel grids (4) are in direct contact with each other and/or empty spaces (5) are left between them and/or the empty spaces between them are filled with sub-pixels into which individual grating pixels (1) are sub-divided.

3. The method according to claim 1 or claim 2, wherein in the defining step (i) a minimum possible dimension (Lx) of a grating pixel (1) is determined in direction (x) from the relation (Lx) = (D)/sin(a) and a minimum possible dimension (Ly) of a grating pixel (1) is determined in direction (y) from the relation (Ly) = (D)/cos(a), where:

D = grating period [μm], and
a = grating tilt angle [degrees, °];

if the found minimum possible dimensions (Lx) and (Ly) of the grating pixel (1) are not integer-divisible by the pitch values of the recording grid or by chosen steps (△x), (△y) of the positioning of the recording beam in respective directions (x) and (y), the dimensions (Lx) and (Ly) of the grating pixel (1) are rounded to the nearest integer multiples of the pitch values of the recording grid or the chosen steps (△x), (△y) of the positioning of the recording beam in respective directions (x) and (y),
and such adjusted dimensions (Lxupr) and (Lyupr) of the grating pixel (1), are used for retrospective determination of the adjusted values of the grating period (Dupr) and grating tilt angle (aupr);
if the adjusted values of the grating period (Dupr) and grating tilt angle (aupr) do not differ from the original grating period (D) and/or original grating tilt angle (a) by more than the predetermined permitted deviation, the adjusted dimensions (Lxupr) and (Lyupr) of the grating pixel (1) represent the final dimensions of the grating pixel (1); and
if the adjusted values of the grating period (Dupr) and/or grating tilt angle (aupr) differ from the values of the grating period (D) and/or grating tilt angle (a) by more than the permitted deviation, the minimum possible dimension (Lx) of the grating pixel (1) is successively increased by its integer multiples in direction (x) and/or the minimum possible dimension (Ly) of the grating pixel (1) is successively increased by its integer multiples in direction (y), until the values of the period (Dupr) and tilt angle (aupr) of the grating achieve values within limits of the predetermined deviation or a given accuracy.

4. The method according to any one of claims 1 to 3, wherein in step (ii) different grating pixels (1) are recorded on the recording medium using a recording beam of respective different cross-sections, whilst for identical grating pixels (1) the cross-section of the recording beam is constant.

5. A method of creation of a diffractive element (2) according to the method of any one of claims 1 to 4, wherein:

subsequent to the step (i) of defining of the set of rectangular grating pixels, but prior to step (ii), there is carried out an additional defining step comprising:

(ia) modifying the boundaries of the defined rectangular grating pixels (1) so as to form modified grating pixels such that when the resulting modified grating pixels having grating lines of the same grating period (D) and grating tilt (a) are periodically reproduced across the recording medium area in a matching manner with a step period, such repeated boundary-modified grating pixels have a step period in a direction (x) of the repeated modified grating pixels which is equal to the dimension (Lx) or a multiple thereof, and a step period in a direction (y) of the repeated modified grating pixels which is equal to the dimension (Ly) or a multiple thereof; and wherein

the step (ii) comprises populating the area of the recording medium by recording thereon the set of modified grating pixels defined in step (ia).

**Patentansprüche**

1. Verfahren zum Herstellen eines Beugungselements (2), in dem ein Satz von ein Beugungsbild-bildende Gitterpixel auf einem Bereich eines Aufzeichnungsmediums mittels eines Aufzeichnungsstrahles erzeugt wird, wobei das Verfahren umfasst:

(i) Definieren eines Satzes von rechteckigen Gitterpixel (1), welche jeweils entsprechende ausgewählte Werte der Abmessungen (Lx) und (Ly) aufweisen, und welche eine Gitterstruktur aufweisen, umfassend gerade Gitterlinien mit einer entsprechenden gegebenen Gitterperiode (D) und einem entsprechenden gegebenen Gitterneigungswinkel (a), wobei zumindest einige der Gitterpixel (1) eine unterschiedliche gegebene Gitterperiode (D) und/oder einen unterschiedlichen gegebenen Gitterneigungswinkel (a) im Verhältnis zu einem oder mehreren anderen Gitterpixel (1) aufweisen, und wobei zumindest einige der Gitterpixel (1) in direktem Kontakt miteinander stehen,
wobei die jeweiligen Werte der Abmessungen (Lx) und (Ly) der Pixel des Satzes von jeweiligen rechteckigen Gitterpixel (1) aus Variablen wie die Werte der Abmessungen (Lx) und (Ly) auswählbar sind,
und Berechnen der jeweiligen zu definierenden Abmessungen (Lx) und (Ly) der entsprechenden Gitterpixel (1), welche dieselbe gegebene Gitterperiode (D) und denselben gegebenen Gitterneigungswinkel (a) aufweisen, aus deren gegebenen Gitterperiode (D) und deren gegebenen Gitterneigungswinkel (a), sodass sich die Linien der Gitterstrukturen der benachbarten Gitterpixel (1) mit derselben Gitterperiode (D) und denselben Gitterneigungswinkel (a) kontinuierlich durch eine gemeinsame Grenze der in einem Pixelgitter (4) angeordneten Gitterpixel (1) erstrecken; und

(ii) Füllen des Bereichs des Aufzeichnungsmedium durch Aufzeichnung auf demselben des Satzes von im Schritt (i) definierten Gitterpixel (1).

2. Verfahren nach Anspruch 1, wobei die einzelnen Gitterpixel (1), welche in Kontakt miteinander sind und dieselbe Gitterperiode (D) und denselben Neigungswinkel (a) aufweisen in Pixelgittern (4) angeordnet sind, welche im Schritt (ii) auf das Aufzeichnungsmedium mittels eines Aufzeichnungsstrahls aufgezeichnet werden, in einer Weise, dass die Pixelgitter (4) in direktem Kontakt miteinander stehen und/oder zwischenliegende Leerräume (5) gelassen werden und/oder zwischenliegende Leerräume mit Subpixeln gefüllt sind, in denen die einzelnen Gitterpixel (1) unterteilt sind.

3. Verfahren nach Anspruch 1 oder 2, wobei im Schritt (i) des Definierens eine kleinstmögliche Abmessung (Lx) eines Gitterpixels (1) in einer Richtung (x) auf Grund der Beziehung (Lx) = (D)/sin(a) definiert wird, und eine kleinstmögliche Abmessung (Ly) eines Gitterpixels (1) in einer Richtung (y) aufgrund der Beziehung (Ly) = D/cos(a) definiert wird, wobei:

  D = Gitterperiode (μm) und
  A = Gitterneigungswinkel (Grad, °);

falls die gefundenen kleinstmöglichen Abmessungen (Lx) und (Ly) der Gitterpixel (1) durch Teilungswerte des Aufzeichnungsgitters oder durch ausgewählte Schritte (Δx), (Δy) der Positionierung des Aufzeichnungsstrahls in entsprechenden Richtungen (x) und (y) nicht ganzzahlig teilbar sind, werden die Abmessungen (Lx) und (Ly) der Gitterpixel (1) auf die nächsten ganzzahligen Mehrfachen der Teilungswerte des Aufzeichnungsgitters oder auf die ausgewählten Schritte (Δx), (Δy) der Positionierung des Aufzeichnungsstrahls in entsprechenden Richtungen (x) und (y) abgerundet, und solche abgerundeten Abmessungen (Lxupr) und (Lyupr) der Gitterpixel (1) werden für eine retrospektive Festlegung der eingestellten Werte der Gitterperiode (Dupr) und des Gitterneigungswinkels (aupr) verwendet; falls die eingestellten Werte der Gitterperiode (Dupr) und des Gitterneigungswinkels (aupr) sich nicht von der anfänglichen Gitterperiode (D) und/oder vom anfänglichen Gitterneigungswinkel (a) um mehr als die erlaubte Abweichung unterscheiden, stellen die eingestellten Abmessungen (Lxupr) und (Lyupr) der Gitterpixel (1) die Endabmessungen der Gitterpixel (1) dar; und

falls die eingestellten Werte der Gitterperiode (Dupr) und des Gitterneigungswinkels (aupr) sich von der anfänglichen Gitterperiode (D) und/oder vom anfänglichen Gitterneigungswinkel (a) um mehr als die erlaubte Abweichung unterscheiden, wird die kleinstmögliche Abmessung (Lx) der Gitterpixel (1) sukzessiv um dessen ganzzahligen Mehrfachen in der Richtung (x) erhöht, und/oder die kleinstmögliche Abmessung (Ly) der Gitterpixel (1) sukzessiv um dessen ganzzahligen Mehrfachen in der Richtung (y) erhöht, bis die Werte der Periode (Dupr) und des Neigungswinkels (aupr) des Gitters Werte innerhalb der Grenzen der vorbestimmten Abweichung oder einer gegebenen Genauigkeit erreichen.

4. Verfahren nach einem der Ansprüche 1 bis 3, wobei im Schritt (ii) unterschiedliche Gitterpixel (1) auf dem Aufzeichnungsmedium mittels eines Aufzeichnungsstrahls mit entsprechenden unterschiedlichen Querschnitten aufgezeichnet werden, während für identische Gitterpixel (1) der Querschnitt des Aufzeichnungsstrahls konstant ist.

5. Verfahren zum Herstellen eines Beugungselements (2) nach dem Verfahren nach einem der Ansprüche 1 bis 4, wobei:

  nach dem Schritt (i) des Definierens des Satzes von rechteckigen Gitterpixel, aber vor dem Schritt (ii), ein zusätzlicher Schritt des Definierens ausgeführt wird, umfassend:

  (ia) Verändern der Grenzen der definierten rechteckigen Gitterpixel (1), um modifizierte Gitterpixel zu bilden, sodass, wenn die resultierenden modifizierten Gitterpixel, welche Gitterlinien mit derselben Gitterperiode (D) und Gitterneigung (a) aufweisen, periodisch über den Aufzeichnungsmediumsbereich in Übereinstimmung mit einer Schrittperiode reproduziert werden, solche wiederholte an den Grenzen modifizierte Gitterpixel eine Schrittperiode in einer Richtung (x) der wiederholten modifizierten Gitterpixel aufweisen, welche der Abmessung (Lx) oder einem Mehrfachen davon entspricht, und eine Schrittperiode in einer Richtung (y) der wiederholten modifizierten Gitterpixel aufweisen, welche der Abmessung (Ly) oder einem Mehrfachen davon entspricht; und wobei

  der Schritt (ii) das Füllen des Bereichs des Aufzeichnungsmediums umfasst, indem auf diesem der Satz im Schritt (ia) definierter modifizierter Gitterpixel aufgezeichnet wird.

## Revendications

1. Procédé de formation d'un élément (2) de diffraction dans lequel un ensemble de pixels de réseau formant une image de diffraction est formé sur une zone d'un milieu d'enregistrement en utilisant un faisceau d'enregistrement, le procédé comprenant les étapes consistant à :

   (i) définir un ensemble de pixels (1) de réseau rectangulaires chacun ayant des valeurs sélectionnées respectives de dimensions (Lx) et (Ly) et ayant une structure de réseau comprenant des lignes droites de réseau possédant une période (D) respective de réseau donnée et un angle (a) d'inclinaison de réseau donné respectif, au moins certains des pixels (1) de réseau possédant une période (D) différente donnée de réseau et/ou un angle (a) différent donné d'inclinaison de réseau à partir d'un autre (ou d'autres) des pixels (1) de réseau, et au moins certains des pixels (1) de réseau étant en contact direct les uns avec les autres, les valeurs respectives des dimensions (Lx) et (Ly) parmi les pixels respectifs de l'ensemble de pixels (1) de réseau rectangulaires pouvant être sélectionnées à partir de telles valeurs variables de ces dimensions (Lx) et (Ly), et calculer les dimensions (Lx) et (Ly) respectives parmi les pixels respectifs des pixels (1) de réseau à définir qui possèdent la même période (D) de réseau donnée et le même angle (a) d'inclinaison de réseau donné par rapport a leur période (D) de réseau donnée et leur angle (a) d'inclinaison de réseau donné de sorte que les lignes des structures de réseau de pixels (1) adjacents de réseau présentant la même période (D) de réseau et le même angle (a) d'inclinaison de réseau sont continues à travers une frontière commune de ces pixels (1) de réseau arrangés dans une grille (4) de pixels ; et
   (ii) peupler la zone du milieu d'enregistrement en enregistrant sur celui-ci l'ensemble de pixels (1) de réseau défini dans l'étape (i).

2. Procédé selon la revendication 1, dans lequel les pixels individuels (1) de réseau en contact les uns avec les autres et possédant la même période (D) de réseau et le même angle (a) d'inclinaison de réseau sont arrangés dans des grilles (4) de pixels qui sont enregistrées lors de l'étape (ii) sur le milieu d'enregistrement par un faisceau d'enregistrement d'une façon telle que les grilles (4) de pixels sont en contact direct les unes avec les autres et/ou des espaces (5) vides sont laissés entre elles et/ou les espaces (5) vides entre elles sont remplis de sous-pixels à l'intérieur desquels les pixels (1) individuels de réseau sont subdivisés.

3. Procédé selon la revendication 1 ou la revendication 2, dans lequel lors de l'étape (i) de définition, une dimension (Lx) minimale possible d'un pixel (1) de réseau est déterminée dans la direction (x) à partir de la relation (Lx) = (D)/sin(a) et une dimension minimale possible d'un pixel (1) de réseau est déterminée dans la direction (y) à partir de la relation (Ly) = (D)/cos(a), où :

   D = période de réseau [μm], et
   a = angle d'inclinaison de réseau [degrés, °] ;

   si les dimensions (Lx) et (Ly) minimales possibles trouvées du pixel (1) de réseau ne sont pas divisibles par un nombre entier par les valeurs de pas de la grille d'enregistrement ou par les étapes (Δx), (Δy) choisies du positionnement du faisceau d'enregistrement dans les directions (x) et (y) respectives, les dimensions (Lx) et (Ly) du pixel (1) de réseau sont arrondies aux multiples entiers les plus proches des valeurs de pas de la grille d'enregistrement ou les étapes (Δx), (Δy) choisies du positionnement du faisceau d'enregistrement dans les directions (x) et (y) respectives, et de telles dimensions ajustées (Lxupr) et (Lyupr) du pixel (1) de réseau sont utilisées pour une détermination rétrospective des valeurs ajustées de la période (Dupr) de réseau et de l'ange (aupr) d'inclinaison de réseau ; si les valeurs ajustées de la période (Dupr) de réseau et de l'ange (aupr) d'inclinaison de réseau ne diffèrent pas de la période (D) originale de réseau et/ou de l'angle (a) d'inclinaison initial de réseau de plus de la déviation permise prédéfinie, les dimensions (Lxupr) et (Lyupr) ajustées du pixel (1) de réseau représentent les dimensions finales du pixel (1) de réseau) ; et si les valeurs ajustées de la période (Dupr) de réseau et/ou de l'ange (aupr) d'inclinaison de réseau diffèrent des valeurs de la période (D) de réseau et/ou de l'angle (a) d'inclinaison de réseau de plus de la déviation permise, la dimension (Lx) minimale possible du pixel (1) de réseau est augmentée successivement par ses multiples entiers dans la direction (x) et/ou la dimension (Ly) minimale possible du pixel (1) de réseau est augmentée successivement par ses multiples entiers dans la direction (y), jusqu'à ce que les valeurs de la période (Dupr) et de l'angle (aupr) d'inclinaison du réseau atteignent des valeurs dans les limites de la déviation prédéterminée ou d'une précision donnée.

4. Procédé selon l'une quelconque des revendications 1 à 3, dans lequel dans l'étape (ii) différents pixels (1) de réseau sont enregistrés sur le milieu d'enregistrement en utilisant un faisceau d'enregistrement de différentes coupes transversales respectives, alors que pour des pixels (1) de réseau identiques la coupe transversale du faisceau d'enregistrement est constante.

5. Procédé de création d'un élément (2) de diffraction selon le procédé de l'une quelconque des revendications 1 à 4, dans lequel :

après l'étape (i) de définition de l'ensemble de pixels rectangulaires de réseau, mais avant l'étape (ii), on a effectué une étape de définition supplémentaire comprenant les étapes consistant à :

(ia) modifier les frontières des pixels (1) rectangulaires de réseau définis de façon à former des pixels de réseau modifiés de sorte que lorsque les pixels de réseau modifiés résultant possédant des lignes de réseau des mêmes période (D) de réseau et inclinaison (a) de réseau sont reproduits périodiquement à travers la zone de milieu d'enregistrement de manière correspondante avec une période d'étape dans une direction (x) des pixels de réseau modifiés répétés qui est égale à la dimension (Lx) ou à un multiple de celle-ci, et une période d'étape dans une direction (y) des pixels modifiés de réseau répétés qui est égale à la dimension (Ly) ou à un multiple de celle-ci ; et

l'étape (ii) comprenant le peuplement de la zone du milieu d'enregistrement en enregistrant sur celui-ci l'ensemble de pixels modifiés de réseau définis dans l'étape (ia).

**Fig. 1**

**Fig. 2**

**Fig. 3**

EP 2 879 883 B1

**Fig. 4**

EP 2 879 883 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20020036731 A1
- WO 2005071444 A2

- DE 10226115 A1

**Non-patent literature cited in the description**

- **SHENG LIH YEH.** Identifying a dot-matrix hologram by the deviations of the fringe positions of its grating dots. *Opt. Eng.,* 07 July 2006, vol. 45, 075803